# EUROPÄISCHE PATENTSCHRIFT

(11) **EP 1 813 139 B1**
(45) Veröffentlichungstag und Bekanntmachung des Hinweises auf die Patenterteilung: **10.12.2008**
(21) Anmeldenummer: 06025602.1
(22) Anmeldetag: 11.12.2006
(51) Int. Cl.: A01B 49/06, A01C 7/20

(54) **Rillensämaschine**
Seeder with grooved roller
Semoir avec rouleau rainuré

(30) Priorität: 31.01.2006 DE 102006004452
(43) Veröffentlichungstag der Anmeldung: 01.08.2007
(73) Patentinhaber: Alois Pöttinger Maschinenfabrik GmbH, 4710 Grieskirchen (AT)
(72) Erfinder: Preimess, Hans-Jörg, 9811 Lendorf 15 (AT)
(74) Vertreter: Thoma, Michael

(56) Entgegenhaltungen:
- EP-A1- 1 212 932
- EP-A2- 1 210 856
- WO-A-85/05246
- WO-A-02/094001
- DE-A1- 3 902 709

## Beschreibung

Die vorliegende Erfindung betrifft eine Rillensämaschine mit einem Saatgutspeicher, mit dem Saatgutspeicher verbindbaren Särohren, einer vor den Särohren herlaufend angeordneten Rillenwalze zur Bodenverfestigung und Einbringung von Särillen in den Boden, in die das Saatgut von den Särohren ablegbar ist, wobei die Särohre mit ihrer Mündung oberhalb der Aufstandsfläche der Rillenwalze enden , so daß das Saatgut aus den Mündungen der Särohre heraus in die Särillen fällt, sowie einer den Särohren nachlaufend angeordneten Nachverfestigungswalze.

Bei derartigen Rillensämaschinen, die gegebenenfalls auch eine vorgeschaltete Bodenbearbeitungseinrichtung beispielsweise in Form einer Scheibenegge aufweisen können, werden durch die den Särohren vorgeschaltete Rillenwalzen in den Boden furchenartige Särillen eingebracht, in die die nachlaufenden Särohre das Saatgut ablegen. Gegebenenfalls können nach den Särohren Striegel vorgesehen sein, die den Boden striegeln und das abgelegte Saatgut mit einer Erdschicht überdecken, die vorzugsweise von einer nachlaufenden Nachverfestigungswalze angedrückt wird. Bei derartigen Rillensämaschinen ist es jedoch oftmals ein Nachteil, daß sie nicht für verschiedene Böden und verschiedenes Saatgut gleich gut funktionieren. Insbesondere wenn verschiedenes Saatgut verschiedene Furchentiefen verlangt, ist dies mit einer solchen Rillensämaschine schwierig zu erreichen.

Aus der EP 0 381 014 A2 ist eine Sämaschine bekannt, bei der auf eine den Särohren nachlaufende Nachverfestigungswalze gänzlich verzichtet wird. Eine Rillenwalze umfaßt elastisch ausgebildete Ringscheiben, die die Särillen in den Boden einbringen. In diesen Särillen laufen Säschare, die in den Boden schneiden und dort das Saatgut ablegen. Bei dieser Sämaschine ist es jedoch in der genannten Weise schwierig, den Saatgutaustrag an die Bodenbeschaffenheit und den Saatguttyp anzupassen. Zudem unterliegen die Säschare nicht unbeträchtlichem Verschleiß. Eine ähnliche Sämaschine zeigt die DE 10215477 A1.

Eine Sämaschine mit Tiefenführung der Säschare zeigt die EP 1 057 392 B1. Hierbei sind den Säscharen Tiefenführungsrollen vorgeschaltet, die vor den Säscharen herlaufen und höheneinstellbar sind. Hierdurch kann die Tiefe eingestellt werden, mit der die Säscharen in den Boden schneiden. Auch hier kommt es jedoch zu starkem Verschleiß der Säschare. Zudem wird keine Särille mehr erzeugt, sondern mit den Tiefenführungsrädern lediglich der Boden vorverdichtet, was das Problem des Verschleißes noch verschärft. Zusätzlich weist diese Sämaschine Transporträder auf, die nach unten geschwenkt werden können, um die gesamte Sämaschine, d.h. die Säschare und die vorlaufenden Tiefenführungsräder vom Boden auszuheben.

Ein solches zuschaltbares Transportrad zeigt auch die DE 3805923 A1. Das Transportrad ist dabei zu den in den Boden grabenden Säscharen nachlaufend angeordnet und kann in einer Transportstellung nach unten abgesenkt werden, so daß die Säscharen vom Boden ausgehoben werden können. Im Gegensatz zu einer Rillensämaschine wird die Säfurche hier jedoch unmittelbar alleine von den Säscharen in den Boden geschnitten. Eine vorlaufende Walze dient lediglich der Vorverdichtung. Auch hier kommt es zu verstärktem Verschleiß der Säscharen, da diese entsprechend tief in den Boden schneiden müssen, um das Saatgut in der gewünschten Tiefe ablegen zu können.

Ferner zeigt die DE 10313181 A1 eine Sämaschine, die mit einer Nachverfestigungswalze arbeitet, die den Säscharen nachgeschaltet ist. Diese Nachverfestigungswalze ist dabei aus elastisch walkbaren Elementen zusammengesetzt, um eine gleichmäßigere Saatguteinbettung zu erreichen. Allerdings arbeitet diese Sämaschine gänzlich ohne vorgeschaltete Rillenwalze, wobei die Säscharen entsprechende Rillen in den Boden schneiden. Auch hier kommt es zu entsprechendem Verschleiß an den Säscharen.

Die EP 1212932 A1 zeigt eine Sämaschine, bei der eine den Säelementen vorauslaufende Vorverfestigungswalze gegenüber einer den Säelementen nachlaufenden Nachverfestigungswalze höhenverstellbar ist. Hierzu ist die Vorverfestigungswalze an einem schwenkbar gelagerten Tragbalken und eine Handkurbel gegenüber dem die Nachverfestigungswalze tragbaren Rahmenteil verschwenkbar. Die Säelemente werden von Säscharen gebildet, die die eigentlichen Säfurchen in den vorverdichteten Boden schneiden und dabei entsprechendem Verschleiß unterliegen. Schließlich zeigt die EP 1210856 eine Sämaschine mit den Säelementen vorauslaufenden und nachlaufenden Walzen, gegenüber denen die Höhe der Säelemente verstellbar ist. Auch hier werden die Säelemente von Säscharen gebildet, die eine Ablagefurche in den Boden schneiden.

Der vorliegenden Erfindung liegt die Aufgabe zugrunde, eine verbesserte Rillensämaschine der eingangs genannten Art zu schaffen, die Nachteile des Standes der Technik vermeidet und letzteren in vorteilhafter Weise weiterbildet. Vorzugsweise soll eine möglichst verschleißfreie Saatguteinbringung erreicht werden, die dennoch hinsichtlich der Einbetttiefe in einfacher Weise an verschiedene Böden, Bodenkonturen und verschiedene Saatguttypen anpaßbar ist.

Erfindungsgemäß wird diese Aufgabe durch eine Rillensämaschine gemäß Anspruch 1 gelöst. Bevorzugte Ausgestaltungen der Erfindung sind Gegenstand der abhängigen Ansprüche.

Erfindungsgemäß sind die vorlaufende Rillenwalze, die die Särillen in den Boden einbringt, und die nachlaufende Nachverfestigungswalze in ihrer Höhenlage relativ zueinander veränderbar, wobei durch eine zugeordnete Arbeitstiefen-Einstellvorrichtung verschiedene Arbeitstiefen der Rillenwalze relativ zur Nachverfestigungswalze und damit verschieden Särillentiefen einstellbar sind. Die Rillenwalze und die Nachverfestigungswalze sind dabei jeweils an Schwingen aufgehängt, die um Schwingenachsen parallel zu den Walzenrotationsachsen schwenkbar und federbeaufschlagt gelagert sind. Die Schwingen für die Rillenwalze und die Schwingen für die Nachverfestigungswalze sind dabei miteinander gekoppelt. Durch die Arbeitstiefen-Einstellvorrichtung können verschiedene Arbeitspositionen der vorlaufenden Rillenwalze relativ zur nachlaufenden Nachverfestigungswalze eingestellt werden, in denen sich die Rillenwalze unterschiedlich tief in den Boden eindrückt und damit unterschiedlich tiefe Särillen ausbildet, in denen das Saatgut von den Särohren abgelegt wird. Durch die Arbeitstiefen-Einstellvorrichtung und die veränderbare Höhenlage der Rillenwalze relativ zu der Nachverfestigungswalze wird die Aufstandskraft bzw. das Gewicht der Sämaschine unterschiedlich zwischen der Rillenwalze und der Nachverfestigungswalze verteilt. Sollen tiefere Särillen eingebracht werden, wird die Nachverfestigungswalze gegenüber der Rillenwalze weiter nach oben verfahren, um weniger Aufstandskraft abzufangen, so daß sich die Rillenwalze tiefer in den Boden drücken kann. Soll demgegenüber eine geringere Särillentiefe erreicht werden, wird die Rillenwalze gegenüber der Nachverfestigungswalze weiter nach oben gefahren, so daß mehr Gewicht von der Nachverfestigungswalze abgefangen wird und dementsprechend die von der Rillenwalze ausgebildete Rillentiefe abnimmt. Hierdurch ist in einfacher Weise eine feinfühlige Anpassung des Saatgutaustrags an verschiedene Böden und/oder verschiedene Saatguttypen erreichbar.

In Weiterbildung der Erfindung ist dabei die Arbeitstiefen-Einstellvorrichtung stufenlos arbeitend ausgebildet. Hierdurch kann eine besonders feinfühlige Anpassung an Böden erreicht werden und die von der Rillenwalze erzeugte Särillentiefe nahezu beliebig fein eingestellt werden. Grundsätzlich möglich wäre auch eine stufenweise Einstellbarkeit. Die zuvor beschriebene stufenlose Ausbildung der Einstellvorrichtung ist jedoch aus den genannten Gründen bevorzugt.

Zusätzlich zu den verschiedenen Arbeitspositionen mit den verschiedenen Arbeitstiefen der Rillenwalze gegenüber der Nachverfestigungswalze ist in Weiterbildung der Erfindung vorgesehen, daß die Rillenwalze über die Nachbefestigungswalze weiterhin in eine Transportstellung bringbar ist, in der die Rillenwalze gänzlich vom Boden ausgehoben ist. Dies kann gleichfalls über die Arbeitstiefen-Einstellvorrichtung erfolgen, wobei in diesem Fall deren Verstellbereich ausreichend groß ist, um die Rillenwalze ausreichend weit über die Aufstandsfläche der Nachverfestigungswalze anheben zu können.

Um den Verschleiß an den Säelementen gänzlich zu beseitigen, ist in Weiterbildung der Erfindung vorgesehen, daß die Säelemente von Särohren gebildet sind, die oberhalb des Bodens der Särillen enden, die von der Rillenwalze in den Boden eingebracht werden. Das Saatgut fällt sozusagen aus den Särohren einfach in die von der Rillenwalze bereits ausgebildeten Särillen, ohne daß die Säelemente eigens Furchen in den Boden ziehen müßten. Insbesondere in Verbindung mit der nachgeschalteten Nachverfestigungswalze kann dennoch ein präziser Saatguteintrag mit genau definierter, gleichmäßiger Einbetttiefe der Saatkörner erreicht werden. Diese wird durch die Arbeitstiefen-Einstellvorrichtung und die damit erzielbare Einstellbarkeit der Druckverteilung zwischen Rillenwalze und Nachverfestigungswalze bewirkt.

Um eine bessere Bodenanpassung und eine gleichmäßige Saatgutausbringung auch bei Bodenwellen bzw. allgemein unebenem Gelände erreichen zu können, sind in Weiterbildung der Erfindung die Rillenwalze und auch die nachlaufende Nachverfestigungswalze jeweils in mehrere Segmente unterteilt, die unabhängig voneinander nachgiebig gelagert sind, so daß bei einem Auffahren auf eine Bodenerhöhung nicht die gesamte Rillenwalze angehoben und der größere Teil der Rillenwalze gänzlich vom Boden abgehoben wird, sondern lediglich der auf die Erhöhung auffahrende Walzenabschnitt nach oben nachgibt.

Um dennoch in der gewünschten Weise eine definierte Saatguteinbettung zu erreichen, sind vorteilhafterweise die Segmente der Nachverfestigungswalze mit den jeweils vorauslaufenden Segmenten der Rillenwalze hinsichtlich ihrer Nachgiebigkeit kinematisch gekoppelt, so daß in etwa zwischen hintereinander herlaufenden Walzensegmenten eine zumindest näherungsweise gleichbleibende Druckverteilung erhalten bleibt.

In Weiterbildung der Erfindung sind die Segmente der Rillenwalze mit den entsprechenden Segmenten der Nachverdichtungswalze durch eine gemeinsame Viergelenksaufhängung gekoppelt. Vorzugsweise können die Rillenwalzensegmente und die Nachverfestigungswalzensegmente, gegebenenfalls zu mehreren zusammengefaßt, jeweils an Schwingen aufgehängt sein, die jeweils um eine Schwingenachse parallel zu den Walzenrotationsachsen schwenkbar gelagert sind und dabei vorzugsweise federnd eingespannt sind. In Weiterbildung der Erfindung kann dies durch eine Quetschelementeaufhängung, insbesondere Gummielementeaufhängung am Schwingendrehpunkt erreicht werden. Dabei können die Schwingenachse und das zugehörige Schwingenauge von der Kreisform abweichende Querschnitte besitzen, wobei zwischen den hierdurch entstehenden Zwischenräumen Quetschelemente aus Gummi vorgesehen sind. Es versteht sich jedoch auch, daß die Federvorspannung durch anderweitig ausgebildete Federelemente, beispielsweise am Maschinenrahmen und den schwingenangelenkten Federelementen erreicht werden kann.

Um eine näherungsweise gleichbleibende Druckverteilung zwischen den Rillenwalzensegmenten und den diesen jeweils nachlaufenden Nachverfestigungswalzensegmenten zu erreichen, können die entsprechenden Schwingen durch einen Lenker miteinander gekoppelt sein, so daß insgesamt eine Vierpunkt- bzw. Viergelenksaufhängung entsteht, wobei der genannte Lenker gegebenenfalls einen Längenversatz und damit eine begrenzt unterschiedliche Schwenkbewegung der Schwingen zulassen kann.

In Weiterbildung der Erfindung ist trotz der Unterteilung der Rillenwalze und/oder der Nachverfestigungswalze in mehrere quer zur Fahrtrichtung nebeneinander angeordnete Segmente eine zentrale Arbeitstiefeneinstellung für die Rillenwalzensegmente vorgesehen. In Weiterbildung der Erfindung umfaßt die Arbeitstiefeneinstellvorrichtung einen Schwenkrahmen, der um eine zu den Walzenrotationsachsen parallele Schwenkachse schwenkbar gelagert ist und durch eine SchwenkwinkelSteuervorrichtung in verschiedene Schwenkstellungen bringbar ist. Insbesondere ist die genannte Schwenkwinkelsteuervorrichtung stufenlos arbeitend ausgebildet, um beliebige Winkelstellungen und damit beliebige Arbeitstiefeneinstellungen erreichen zu können. Nach einer vorteilhaften Ausführung der Erfindung besitzt die Schwenkwinkelsteuervorrichtung einen längenveränderbaren Kraftheber vorzugsweise in Form eines Druckmittelzylinders, der einerseits an dem Schwenkrahmen und andererseits an einem Maschinenrahmenelement angelenkt ist, so daß durch Längenveränderung des Krafthebers die Winkelstellung des Schwenkrahmens und damit die Arbeitstiefeneinstellung verändert werden kann.

Die vorgenannten Schwingen, an denen die einzelnen Walzensegmente aufgehängt sind, sind dabei vorteilhafterweise an dem genannten Schwenkrahmen gelagert, und zwar vorteilhafterweise sowohl die Schwingen für die Rillenwalze auch die Schwingen für die Nachverfestigungswalze.

In Weiterbildung der Erfindung ist zusätzlich zu der Nachverfestigungswalze noch zumindest eine Striegelvorrichtung vorgesehen, um den Boden hinter den Säelementen zu striegeln und das in die Särillen gefallene Saatgut mit einer Erdschicht zu bedecken. Vorzugsweise ist dabei zumindest eine Striegelvorrichtung mit dem vorgenannten Schwenkrahmen kinematisch gekoppelt, so daß sich das Höhenniveau der Striegelvorrichtung zusammen mit der Arbeitstiefe der Rillenwalze ändert. Insbesondere wird die Striegelvorrichtung derart mit der Rillenwalze gekoppelt, daß beim Ausheben der Rillenwalze gänzlich vom Boden in die Transportstellung auch die Striegelvorrichtung gänzlich vom Boden ausgehoben wird.

Nach einer vorteilhaften Ausführung der Erfindung kann ein Striegel in Fahrtrichtung gesehen hinter den Säelementen, jedoch vor der Nachverfestigungswalze angeordnet sein, wobei der Striegel unmittelbar an dem vorgenannten Schwenkrahmen befestigt sein kann. Vorzugsweise umfaßt die Befestigung dabei eine Höheneinstellvorrichtung, mit Hilfe derer die Striegelhöhe gegenüber dem Schwenkrahmen verändert werden kann. Alternativ oder zusätzlich kann auch ein Striegel in Fahrtrichtung gesehen hinter der Nachverfestigungswalze vorgesehen sein. Auch ein solcher Striegel ist vorteilhafterweise in der vorgenannten Weise kinematisch mit der Rillenwalze gekoppelt.

Die Nachverfestigungswalze muß sich nicht über die gesamte Arbeitsbreite der Rillenwalze erstrecken. Im Extremfall kann die Nachverfestigungswalze auch aus nur einem Rad bestehen, soweit dieses breit genug ist, um die Tiefenführung der Rillenwalze in der vorgenannten gewünschten Art sicherstellen zu können. In Weiterbildung der Erfindung jedoch besitzt die Nachverfestigungswalze zumindest annäherungsweise eine Arbeitsbreite, die der Arbeitsbreite der Rillenwalze entspricht. Vorzugsweise ist die Nachverfestigungswalze dabei als Packerwalze ausgebildet, die aus einer Vielzahl von quer zur Fahrtrichtung nebeneinander angeordneten Walzenrädern besteht. Diese können einzeln, gegebenenfalls auch zu Gruppen zusammengefaßt in der vorgenannten Weise über Schwingen an dem Schwenkrahmen der Sämaschine angelenkt und/oder mit den vorauslaufenden Segmenten der Rillenwalze gekoppelt sein.

Die Rillenwalze bzw. deren Segmente besitzen in Weiterbildung der Erfindung radial vorspringende Scheiben, die sich als Rillen in den Boden drücken. Die Scheiben können dabei nach außen leicht konisch zulaufende Querschnitte besitzen, um Rillen mit sich nach unten aufeinander zuneigenden Flanken zu erzeugen. Es sind jedoch auch andere Scheibenquerschnitte und damit andere Rillenquerschnitte im Rahmen der vorliegenden Erfindung möglich. Zwischen den vorspringenden Scheiben kann die Rillenwalze bzw. deren Segmente im wesentlichen zylindrische Aufstandsflächen besitzen.

In Weiterbildung der Erfindung ist der Rillenwalze eine Bodenbearbeitungseinrichtung vorzugsweise in Form einer Egge vorgeschaltet. Insbesondere kann eine mehrreihige Scheibenegge der Rillenwalze vorauslaufend angeordnet sein.

Die vorliegende Erfindung wird nachfolgend anhand eines bevorzugten Ausführungsbeispiels und zugehöriger Zeichnungen näher erläutert. In den Zeichnungen zeigen:
- Figur 1:: eine Seitenansicht einer Rillensämaschine nach einer bevorzugten Ausführung der Erfindung in einer Arbeitsstellung,
- Figur 2:: eine Seitenansicht der Sämaschine aus Figur 1 in einer Transportstellung, in der eine Bodenbearbeitungsreinrichtung sowie eine den Säelementen vorgeschaltete Rillenwalze vom Boden ausgehoben ist, und
- Figur 3:: eine Draufsicht auf die Sämaschine aus den vorhergehenden Figuren, die die Unterteilung der Rillenwalze und der nachgeschalteten Nachverfestigungswalze in mehrere nebeneinander angeordnete Segmente zeigt.

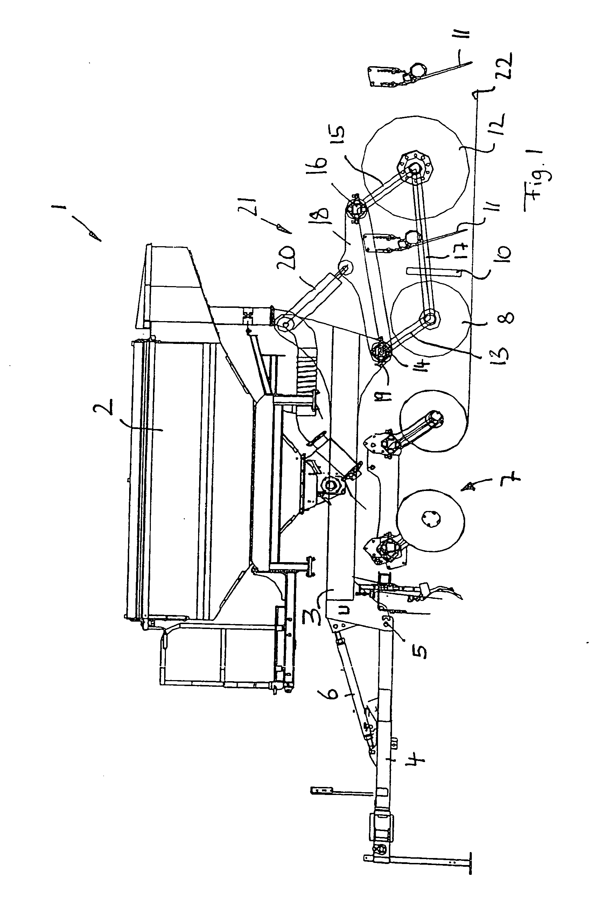

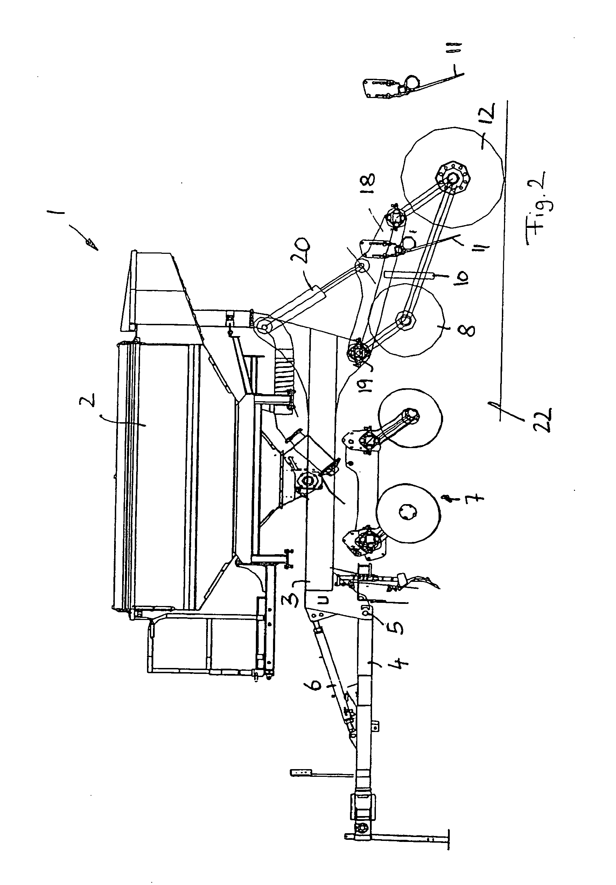

Die in den Figuren gezeichnete Rillensämaschine 1 umfaßt einen Saatgutspeicher 2, der auf einem Maschinenrahmen 3 sitzt, der über eine Deichsel 4 an einen Schlepper anhängbar ist. Die Deichsel 4 ist dabei als Knickdeichsel ausgebildet. Wie Figuren 1 und 2 zeigen, ist sie um eine in Fahrtrichtung gesehen querliegende Deichselachse 5 und einen zugehörigen längenverstellbaren Lenker 6 beispielsweise in Form eines Druckmittelzylinders gegenüber dem Maschinenrahmen 3 verschwenkbar, um einerseits die Sämaschine 1 grundsätzlich auszurichten, insbesondere jedoch diese besser in eine vom Boden abgehobene Transportstellung ausheben zu können.

Unter dem Saatgutspeicher 2 ist eine Bodenbearbeitungseinrichtung 7 in Form einer Egge vorgesehen, die in der gezeichneten Ausführung als zweireihige Scheibenegge ausgebildet ist. Die Bodenbearbeitungsreinrichtung 7 ist dabei an den Maschinenrahmen 3 befestigt und kann gegebenenfalls gegenüber diesem positionsverstellt, insbesondere höhenverstellt werden.

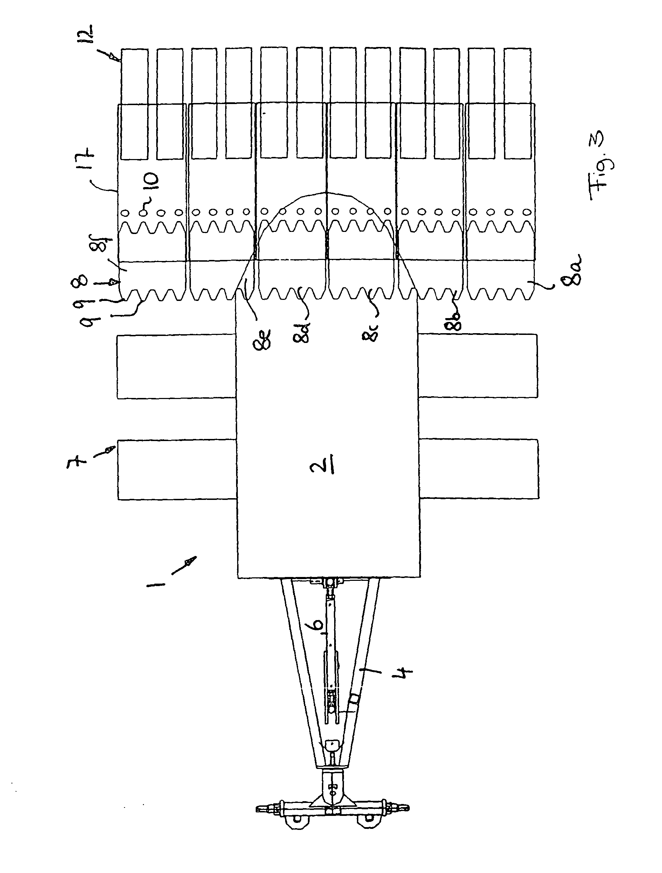

Der Bodenbearbeitungseinrichtung 7 nachgeschaltet ist eine Rillenwalze 8, die den vorbearbeitenden Boden verdichtet und in diesen Särillen einbringt. Wie Figur 3 zeigt, umfaßt die Rillenwalze 7 an ihrem Umfang eine Vielzahl von radial vorspringenden Scheiben 9, die sich beim Abrollen der Rillenwalze 8 auf den Boden in diesen eindrücken und Särillen hinterlassen.

In Fahrtrichtung gesehen hinter der Rillenwalze 8 sind eine Vielzahl von Säelementen 10 vorgesehen, die in einer Reihe quer zur Fahrtrichtung voneinander beabstandet angeordnet sind. Vorteilhafterweise sind die Säelemente 10 nicht als sich in den Boden eingrabende Säschare, sondern als Särohre ausgebildet, deren Mündung oberhalb der Aufstandsfläche der Rillenwalze 8, insbesondere dem Umfang der Scheiben 9 angeordnet sind. Die genannten Särohre 10 sind dabei in an sich bekannter Weise mit dem Saatgutspeicher 2 verbindbar, um das Saatgut auszubringen. Das Saatgut fällt dabei einfach aus den Särohren in die von der Rillenwalze 8 eingebrachten Särillen und bleibt auf deren Boden liegen. Die Särohre 10 sind dabei fluchtend in der Spurt der Särillen angeordnet.

Wie Figur 1 zeigt, ist den Säelementen 10 nachgeschaltet ein Striegel 11 vorgesehen, der über den Boden, insbesondere die Kuppen zwischen den Särillen striegelt, um eine dünne Erdschicht über das Saatgut zu bringen, bzw. die zumindest näherungsweise wieder zu verschließen. Der Striegel 11 kann dabei in an sich bekannter Weise aus elastischen Gleitzinken bestehen, die über den Boden gleiten und federnd angedrückt werden.

Weiterhin ist in Fahrtrichtung gesehen hinter dem Striegel 11 eine Nachverfestigungswalze 12 vorgesehen, die vorteilhafterweise als Packerwalze ausgebildet ist und den Boden nach dem Saatgutaustrag und der Bodenstriegelung wieder nachverfestigt. Die Nachverfestigungswalze 12 kann im Gegensatz zu der Rillenwalze 8 eine im wesentlichen zylindrische Kontur bzw. bei Ausbildung als Packerwalze eine zylindrische Hüllkontur besitzen.

Wie die Figuren 1 und 2 zeigen, kann gegebenenfalls ein weiterer Striegel 11 hinter der Nachverfestigungswalze 12 angeordnet sein.

Wie Figur 3 zeigt, ist auch die Rillenwalze 8 in mehrere Walzensegmente 8 a, 8 b, 8 c ... unterteilt, die nebeneinander angeordnet sind und im Ausgangszustand auf koaxialen Rotationsachsen sitzen. Dabei ist jedes Segment der Rillenwalze 8 separat aufgehängt, und zwar in Höhenrichtung nachgiebig. Hierzu sind Schwingen 13 vorgesehen, die an ihrem einen Ende das jeweilige Walzensegment tragen und mit ihrem anderen Ende um eine Schwingenachse 14 parallel zur Drehachse der Rillenwalze 8 bzw. ihrer Segmente schwenkbar an einem Rahmenelement gelagert ist. Die Schwingen 13 sind dabei federbeaufschlagt, so daß sie entgegen der Federkraft nach oben nachgeben können. In der gezeichneten Ausführung ist dabei im Bereich der Schwingenachsen 14 eine Quetschelemente-Lagerung mit Gummielementen vorgesehen, die als solche an sich bekannt ist. Durch die separate Aufhängung der einzelnen Segmente der Rillenwalze 8 können diese unabhängig voneinander beispielsweise beim Auffahren auf eine partielle Bodenerhöhung in der Höhe nachgeben und eine bessere Bodenanpassung erreichen.

In entsprechender Weise ist auch die Nachverfestigungswalze 12 gelagert. Diese ist als Packerwalze ausgebildet und besteht damit aus einer Vielzahl nebeneinander angeordneten Walzenrädern, wobei die Walzenräder jeweils paarweise zusammengefaßt sein können und jeweils über Schwingen 15 in ihrer Höhe elastisch nachgiebig gelagert sind. Die Schwingen 15 sind dabei entsprechend den Schwingen 13 um ihre Schwingenachse 16 elastisch nachgiebig gelagert.

Wie Figuren 1 und 2 verdeutlichen, sind die Schwingen 13 der Rillenwalzensegmente sowie die Schwingen 15 der Packerwalzenräder über Lenker 17 miteinander gekoppelt, wobei der Lenker 17 eine begrenzte Freigängigkeit der Kopplung beispielsweise über eine Langlochbefestigung erlauben kann. Vorzugsweise jedoch ist eine spielfreie Kopplung vorgesehen, um eine präzise Arbeitstiefensteuerung der Rillenwalzensegmente zu erreichen.

Wie Figur 1 zeigt, sind die Rillenwalze 8 und die Nachverfestigungswalze 12 an einem gemeinsame Schwenkrahmen 18 gelagert, der sich in der in Figur 1 gezeigten Arbeitsstellung grob gesprochen horizontal in Fahrtrichtung erstreckt, wobei an seinem vorderen Ende die Rillenwalze 8 über die Schwingen 13 und an seinem hinteren Ende die Nachverfestigungswalze 12 über die Schwingen 15 angelenkt ist. Der Schwenkrahmen 18 selbst ist um eine Schwenkrahmenachse 19, die sich parallel zu den Walzenrotationsachsen erstreckt, an dem Maschinenrahmen 3 bzw. einem damit verbundenen Rahmenteil schwenkbar angelenkt, so daß er auf und nieder gewippt werden kann.

Die Schwenkstellung des Schwenkrahmens 18 kann über einen Kraftheber 20 vorzugsweise in Form eines Druckmittelzylinders stufenlos verändert und eingestellt werden, der einerseits am Maschinenrahmen 3 und andererseits an dem Schwenkrahmen 18 angelenkt ist.

Der Schwenkrahmen 18 bildet zusammen mit dem Kraftheber 20 die Arbeitstiefen-Einstellvorrichtung 21, mittels derer die Arbeitstiefe der Rillenwalze 8 und damit die von dieser erzeugte Särillentiefe verändert und eingestellt werden kann. Wird der Schwenkrahmen 18 mit seinem hinteren Ende nach unten gewippt, wird die Nachverfestigungswalze 12 relativ zur Rillenwalze 8 abgesenkt, wodurch die Nachverfestigungswalze 12 mehr Aufstandskraft übernimmt, so daß sich die Rillenwalze 8 weniger tief in den Boden eindrückt. Umgekehrt kann die Arbeitstiefe der Rillenwalze 8 und damit die Särillentiefe vergrößert werden, wenn der Schwenkrahmen 18 und damit die Nachverfestigungswalze 12 nach oben gefahren wird.

Wie Figur 2 zeigt, ist der Verstellbereich der Arbeitstiefeneinstellvorrichtung 21 dabei derart groß, daß über die verschiedenen Arbeitsstellungen hinaus die Rillenwalze 8 gänzlich vom Boden abgehoben und in eine entsprechende Transportstellung gebracht werden kann. Hierbei kann gleichzeitig die Deichsel 4 geringfügig nach unten geknickt werden, um ein weiteres Ausheben der Rillenwalze 8 und der vorgeschalteten Bodenbearbeitungseinrichtung 7 zu erreichen.

Wie Figur 2 zeigt, ist vorteilhafterweise der Striegel 11 bzw. sind die beiden Striegel 11 kinematisch mit der Rillenwalze 8 gekoppelt, so daß beim Anheben der Rillenwalze 8 gegenüber der Nachverfestigungswalze 12 auch die Striegel 11 angehoben werden.

## Patentansprüche

1. Rillensämaschine mit einem Saatgutspeicher (2), mit dem Saatgutspeicher (2) verbindbaren, aus Särohren (10) bestehenden Säelementen, einer vor den Sährohren (10) herlaufenden Rillenwalze (8) zur Bodenverfestigung und Einbringung von Särillen in den Boden (22), in die das Saatgut von den Sährohren (10) ablegbar ist, wobei die Särohre (10) mit ihren Mündungen oberhalb der Aufstandsfläche der Rillenwalze (8) enden, so daß das Saatgut aus den Mündungen der Särohren heraus in die Särillen fällt, sowie mit einer den Särohren (10) nachlaufenden Nachverfestigungswalze (12), **dadurch gekennzeichnet, daß** durch eine Arbeitstiefen-Einstellvorrichtung (21) verschiedene Arbeitstiefen der Rillenwalze (8) relativ zur Nachverfestigungswalze (12) und damit verschiedene Särillentiefen einstellbar sind.

2. Rillensämaschine nach dem vorgehenden Anspruch, wobei die Arbeitstiefen-Einstellvorrichtung (21) stufenlos arbeitend ausgebildet ist.

3. Rillensämaschine nach einem der vorgehenden Ansprüche, wobei die Rillenwalze (8) über die Nachverfestigungswalze (12) in eine Transportstellung gänzlich vom Boden (22) aushebbar ist.

4. Rillensämaschine nach einem der vorgehenden Ansprüche, wobei die Rillenwalze (8) und die Nachverfestigungswalze (12) an einem gemeinsamen Schwenkrahmen (18) aufgehängt sind, der um eine zu den Walzenrotationsachsen parallele Schwenkrahmenachse (19) schwenkbar gelagert ist, wobei die Arbeitstiefeneinstellvorrichtung (21) eine Schwenkwinkelsteuervorrichtung (20) zur Veränderung des Schwenkwinkels des Schwenkrahmens (18) aufweist.

5. Rillensämaschine nach dem vorgehenden Anspruch, wobei die Schwenkwinkelsteuervorrichtung einen Druckmittelzylinder (20), der an dem Schwenkrahmen (18) und an einem Maschinenrahmenelement angelenkt ist, aufweist.

6. Rillensämaschine nach einem der vorgehenden Ansprüche, wobei die Rillenwalze (8) und die Nachverfestigungswalze (12) jeweils an Schwingen (13; 15) aufgehängt sind, die um Schwingenachsen (14; 16) parallel zu den Walzenrotationsachsen schwenkbar, vorzugsweise federbeaufschlagt gelagert sind.

7. Rillensämaschine nach dem vorhergehenden Anspruch, wobei die Schwingen (13) für die Rillenwalze (8) und die Schwingen (15) für die Nachverfestigungswalze (12) miteinander gekoppelt sind.

8. Rillensämaschine nach dem vorhergehenden Anspruch, wobei die Rillenwalze (8) und die Nachverfestigungswalze (12) durch eine gemeinsame Viergelenksaufhängung beweglich gelagert und/oder miteinander gekoppelt sind.

9. Rillensämaschine nach einem der vorhergehenden Ansprüche, wobei die Rillenwalze (9) und/oder die Nachverfestigungswalze (12) in Segmente unterteilt ist, die jeweils höhenveränderlich gelagert sind, wobei zumindest ein Rillenwalzensegment gegenüber einem anderen Rillenwalzensegment höhenveränderbar und/oder zumindest ein Nachverfestigungswalzensegment gegenüber einem weiteren Nachverfestigungswalzensegment höhenveränderbar ist.

10. Rillensämaschine nach dem vorhergehenden Anspruch, wobei die Rillenwalzensegmente jeweils mit einem nachlaufenden Nachverfestigungswalzensegment hinsichtlich ihrer Höhenbeweglichkeit gekoppelt sind.

11. Rillensämaschine nach einem der beiden vorhergehenden Ansprüche in Verbindung mit Anspruch 4, wobei die Schwingen (13) für die Rillenwalze (8) und die Schwingen (15) für die Nachverfestigungswalze (12) an dem gemeinsamen Schwenkrahmen (18) angelenkt sind.

12. Rillensämaschine nach einem der vorhergehenden Ansprüche, wobei die Nachverfestigungswalze (12) als Packerwalze bestehend aus einer Vielzahl von Walzenrädern ausgebildet ist.

13. Rillensämaschine nach einem der vorhergehenden Ansprüche, wobei die Nachverfestigungswalze sich im wesentlichen über die gesamte Breite der Rillenwalze (8) erstreckt.

14. Rillensämaschine nach einem der vorhergehenden Ansprüche, wobei vor der Nachverfestigungswalze (12) und/oder nach der Nachverfestigungswalze ein Striegel (11) vorgesehen ist.

15. Rillensämaschine nach dem vorgehenden Anspruch, wobei der Striegel (11) kinematisch mit der Rillenwalze (8), insbesondere dem Schwenkrahmen 18 gekoppelt ist und zusammen mit der Rillenwalze (8) höheneinstellbar ist.

16. Rillensämaschine nach einem der vorhergehenden Ansprüche, wobei vor der Rillenwalze (8) herlaufend eine Bodenbearbeitungseinrichtung (7), vorzugsweise eine Egge, insbesondere eine mehrreihige Scheibenegge, angeordnet ist.

17. Rillensämaschine nach einem der vorhergehenden Ansprüche, wobei die Rillenwalze (8) an ihrem Umfang radial vorspringende Scheiben aufweist.

## Claims

1. A seeder with grooved roller comprising a seed hopper (2), sowing elements which are comprised of sowing tubes (10) attachable to the seed hopper (2), a grooved roll (8) preceding the sowing tubes (10) for solidification of soil and introducing sowing grooves into the soil (22) into which the seeds can be deposited, the sowing tubes (10) ending above the bearing face of the grooved roll (8) such that the seeds are falling out of the mouthes of the sowing tubes into the sowing grooves, as well as a post-solidification roll (12) castering the sowing tubes (10), **characterized in that** different working depths of the grooved roll (8) in relation to the post-solidification roll (12) and thus different depths of sowing grooves can be set by a working depth setting device (21).

2. The seeder with grooved roller according to the preceding claim wherein the working depth setting device (21) is formed as one operating infinitely variable.

3. The seeder with grooved roller according to either of the preceding claims wherein the grooved roll (8) can completely be lifted out of the soil (22) into a conveying position by way of the post-solidification roll (12).

4. The seeder with grooved roller according to any one of the preceding claims wherein the grooved roll (8) and the post-solidification roll (12) are suspended to a jointly shared swing frame (18) which is pivotally deposited in relation to a swing frame axis (19) parallel to the roll's rotational axes wherein the working depth setting device (21) exhibits a pivoting angle controlling device (20) for modificating the pivoting angle of the swing frame (18).

5. The seeder with grooved roller according to the preceding claim wherein the pivoting angle controlling device (20) comprises a hydraulic cylinder (20) which is articulated to the swing frame (18) and to a seeder frame element.

6. The seeder with grooved roller according to any one of the preceding claims wherein the grooved roll (8) and the post-solidification roll (12) are each suspended on rockers (13; 15), which are deposited in a pivotional, preferably spring-mounted manner in relation to the rocker axes (14; 16) parallel to the roll's rotational axes.

7. The seeder with grooved roller according to the preceding claim wherein the rockers (13) for the grooved roll (8) and the rockers (15) for the post-solidification roll (12) are coupled to each other.

8. The seeder with grooved roller according to the preceding claim wherein the grooved roll (8) and the post-solidification roll (12) are movably mounted and/or coupled to each other by way of a jointly shared four joint suspension.

9. The seeder with grooved roller according to any one of the preceding claims wherein the grooved roll (8) and/or the post-solidification roll (12) is divided in segments which each are mounted vertically adjustable wherein at least one grooved roll segment is vertically adjustable in relation to another grooved roll segment and/or at least one post-solidification roll segment is vertically adjustable in relation to another post-solidification roll segment.

10. The seeder with grooved roller according to the preceding claim wherein the grooved roll segments are each coupled with a castering post-solidification roll segment in view of their vertical movability.

11. The seeder with grooved roller according to either one of the preceding claims and claim 4 wherein the rockers (13) for the grooved roll (8) and the rockers for the post-solidification roll (12) are articulated to the jointly shared swing frame (18).

12. The seeder with grooved roller according to any one of the preceding claims wherein the post-solidification roll (12) is formed as a packing roll consisting of a variety of roll wheels.

13. The seeder with grooved roller according to any one of the preceding claims wherein the post-solidification roll essentially extends over the total width of the grooved roll (8).

14. The seeder with grooved roller according to any one of the preceding claims wherein smoothing pins (11) are provided in front of the post-solidification roll (12) and/or behind of the post-solidification roll (12).

15. The seeder with grooved roller according to the preceding claim wherein the smoothing pins (11) are kinematically coupled to the grooved roll (8), especially to the swing frame (18), and is vertically adjustable in connection with the grooved roll (8).

16. The seeder with grooved roller according to any one of the preceding claims wherein a soil cultivation device (7), preferably a harrow, especially disc harrow with multiple rows, is arranged in a manner preceding the grooved roll (8).

17. The seeder with grooved roller according to any one of the preceding claims wherein the grooved roll (8) comprises radially protruding circumferential discs.

## Revendications

1. Semoir avec rouleau rainuré avec un organe de stockage de semences (2), avec des éléments de semaison pouvant être reliés à l'organe de stockage des semences (2), constitué de tubes de semaison (10), un rouleau rainuré (8) passant devant les tubes de semaison (10) pour compacter le sol et pour ménager des rainures de semaison dans le sol (22), dans lesquelles peuvent être déposées les semences par les tubes de semaison (10), où les tubes de semaison se terminent avec leurs embouchures au-dessus de la face d'appui du rouleau rainuré (8) de sorte que les semences tombent des embouchures des tubes de semaison dans les rainures de semaison, et avec un rouleau de post-compactage (12) faisant suite aux tubes de semaison (10), **caractérisé en ce que** par un dispositif de réglage de profondeur de travail (21), différentes profondeurs de travail du rouleau rainuré (8) peuvent être réglées relativement au rouleau de post-compactage (12) et donc différentes profondeurs de rainure de semaison.

2. Semoir avec rouleau rainuré selon la revendication précédente, où le dispositif de réglage (21) de la profondeur de travail est réalisé avec un fonctionnement progressif.

3. Semoir avec rouleau rainuré selon l'une des revendications précédentes, où le rouleau rainuré (8) peut être relevé complètement du sol (22)par-dessus le rouleau de post-compactage (12) dans une position de transport.

4. Semoir avec rouleau rainuré selon l'une des revendications précédentes, où le rouleau rainuré (8) et le rouleau de post-compactage (12) sont accrochés à un cadre de pivotement commun (18) qui est logé d'une manière pivotante autour d'un axe de cadre de pivotement (19) parallèle aux axes de rotation de rouleau, où le dispositif de réglage (21) de la profondeur de travail présente un dispositif de commande de l'angle de pivotement (20) pour modifier l'angle de pivotement du cadre de pivotement (18).

5. Semoir avec rouleau rainuré selon la revendication précédente, où le dispositif de commande de l'angle de pivotement présente un vérin de fluide sous pression (20) qui est articulé au cadre de pivotement (18) et à un élément de cadre de machine.

6. Semoir avec rouleau rainuré selon l'une des revendications précédentes, où le rouleau rainuré (8) et le rouleau de post-compactage (12) sont accrochés chacun à des bielles (13; 15) qui sont logées d'une manière pivotante, de préférence en étant sollicitées par ressort, autour d'axes de bielles (14; 16), parallèlement aux axes de rotation de rouleau.

7. Semoir avec rouleau rainuré selon l'une des revendications précédentes, où les bielles (13) pour le rouleau rainuré (8) et les bielles (15) pour le rouleau de post-compactage (12) sont couplées entre elles.

8. Semoir avec rouleau rainuré selon la revendication précédente, où le rouleau rainuré (8) et le rouleau de post-compactage (12) sont logés d'une manière mobile et/ou couplés l'un à l'autre par une suspension commune à quatre joints articulés.

9. Semoir avec rouleau rainuré selon l'une des revendications précédentes, où le rouleau rainuré et/ou le rouleau de post-compactage (12) sont divisés en des segments qui sont logés respectivement d'une manière modifiable en hauteur, où au moins un segment de rouleau rainuré est modifiable en hauteur par rapport à un autre segment de rouleau rainuré et/ou au moins un segment de rouleau de post-compactage est modifiable en hauteur par rapport à un autre segment de rouleau de post-compactage.

10. Semoir avec rouleau rainuré selon la revendication précédente, où les segments de rouleau rainuré sont couplés respectivement avec un segment de rouleau de post-compactage faisant suite, en ce qui concerne leur mobilité en hauteur.

11. Semoir avec rouleau rainuré selon l'une des deux revendications précédentes en rapport avec la revendication 4, où les bielles (13) pour le rouleau rainuré (8) et les bielles (15) pour le rouleau de post-compactage (12) sont articulées au même cadre de pivotement (18).

12. Semoir avec rouleau rainuré selon l'une des revendications précédentes, où le rouleau de post-compactage (12) est réalisé comme rouleau composé constitué d'une pluralité de rouleaux.

13. Semoir avec rouleau rainuré selon l'une des revendications précédentes, où le rouleau de post-compactage s'étend sensiblement sur toute la largeur du rouleau rainuré (8).

14. Semoir avec rouleau rainuré selon l'une des revendications précédentes, où est prévue en amont du rouleau de post-compactage (12) et/ou en aval du rouleau de post-compactage une étrille (11).

15. Semoir avec rouleau rainuré selon la revendication précédente, où l'étrille (11) est couplée de manière systématique avec le rouleau rainuré (8), en particulier le cadre de pivotement (18) et est réglable en hauteur conjointement avec le rouleau rainuré (8).

16. Semoir avec rouleau rainuré selon l'une des revendications précédentes, où est disposé, en passant devant le rouleau rainuré (8), une installation de traitement de sol (7), de préférence une herse, en particulier un pulvérisateur à disques à rangées multiples.

17. Semoir avec rouleau rainuré selon l'une des revendications précédentes, où le rouleau rainuré (8) présente des disques faisant saillie radialement à son pourtour.
